Europäisches Patentamt

European Patent Office

Office européen des brevets

(11) Veröffentlichungsnummer: **0 431 268 A1**

(12) **EUROPÄISCHE PATENTANMELDUNG**

(21) Anmeldenummer: 90117711.3

(22) Anmeldetag: 14.09.90

(51) Int. Cl.5: **D01H 9/18,** D01H 13/00, B65H 43/08, B07C 5/38

(30) Priorität: 18.10.89 CH 3779/89

(43) Veröffentlichungstag der Anmeldung:
12.06.91 Patentblatt 91/24

(84) Benannte Vertragsstaaten:
CH DE ES FR GB GR IT LI

(71) Anmelder: **MASCHINENFABRIK RIETER AG**

**CH-8406 Winterthur(CH)**

(72) Erfinder: **Erni, Markus**
**Langgasse 56**
**CH-8400 Winterthur(CH)**

(54) Anlage bzw. Anlagesteuerung zum Fördern von Flyerspulen auf eine Ringspinnmaschine.

(57) In einer Anlage zum Fördern von Flyerspulen an Ringspinnmaschinen, sowie Flyerhülsen an den Flyern zurück, ist eine Zentralsteuerung sowie eine Steuerung für jede Spinnmaschine vorgesehen. Die Anlage wird aus Standardelementen zusammengestellt und derart gesteuert, dass nur Züge ein einem vorbestimmten Zustand an einen Flyer geschickt werden.

Fig. 12

## ANLAGE BZW. ANLAGESTEUERUNG ZUM FÖRDERN VON FLYERSPULEN AN EINE RINGSPINNMASCHINE.

Diese Erfindung bezieht sich auf eine Anlage zur Beschickung von Ringsinnmaschinen mit Flyerspulen und insbesondere auf die Steuerung einer solchen Anlage.

Es ist bekannt, dass eine Gruppe von Ringspinnmaschinen in einer Spinnerei über ein Transportsystem in der Form eines Schienennetzes (insbesondere in der Form von einem Hängebahnnetz) mit Flyerspulen beliefert werden kann. Zu diesem Zweck ist es bekannt, die Flyerspulen auf Träger aufzuladen, die zu einem "Zug" zur Förderung durch das Transportsystem zusammengestellt werden. Ein solcher Zug kann direkt ins Gatter einer Ringspinnmaschine eingefahren werden (zBsp. nach dem in US-PS 3828682 vorgeschlagenen Prinzip) oder der Zug kann um die Ringspinnmaschine herumfahren, während Flyerspulen bei Bedarf vom Zug ins Gatter der Spinnmaschine umgeladen werden (z.B. gemäss dem in DE-A-3601832 vorgeschlagenen Prinzip).

Solange bei einem Spulenwechsel im Ringspinngatter Spinnereipersonal mindestens zur Ueberwachung des Verfahrens vorhanden ist, können verschiedene Kompromisse in bezug auf die Anlagesteuerung eingegangen werden. Dies gilt aber nicht mehr, wenn die Anlage voll automatisch laufen sollte. Der Konstrukteur einer solchen Anlage muss davon ausgehen, dass das Spulenwechselverfahren ohne irgendwelche menschliche Intervention abläuft und er muss eine entsprechende Steuerung vorsehen.

Es muss als erstes eine Prinzipentscheidung getroffen werden, nämlich wo liegt die "Intelligenz" (Informationsverarbeitungskapazität) im System. Es kann zBsp. jeder Zug, (jedes Fahrzeug) mit Intelligenz versehen werden, sodass der Zug imstande ist, weitgehend selbstständig "Fahraufträge" auszuführen. Eine solche Lösung ist aber für die Beförderung von Flyerspulen über ein Schienennetz an eine Gruppe von Ringspinnmaschinen nicht attraktiv, da auch bei kleineren Anlagen viele Züge vorgesehen werden müssen. Die Kosten der Rechenkapazität und der Wartung des Systems wären relativ hoch, wenn zBsp. jeder Zug mit einem eigenen Prozessor versehen werden müsste.

Eine weitere Möglichkeit liegt darin, alle Intelligenz in einem Zentralrechner vorzusehen, welcher dann das gesamte Transportsystem bis in die Maschinen hinein steuert. Die Rechenkapazität eines solchen "allwissenden" Prozessors müsste aber ziemlich gross sein und die Uebertragung der notwendigen Daten aus allen Ecken der Anlage an den zentralen Rechner würde für eine Flyer-Ringspinn-Anlage erhebliche Probleme hervorrufen.

Ein Ansatz für eine Lösung zu diesem Problem ist in unserem Objekt Nr. 908 (CH-Patentanmeldung Nr. 1396/89 vom 13. April 1989, "Spulenfördersystem") enthalten. Gemäss diesem Vorschlag ist die Spinnmaschine selber mit einer autonom arbeitenden Steuerung versehen, um Bewegungen der Flyerspulen innerhalb der Maschine zu bestimmen. Diese Lösung ermöglicht sowohl eine rationelle Verteilung der Intelligenz über das ganze Transportsystem als auch die Ausnützung der Rechenkapazität, die heutzutage ohnehin für jede Spinnmaschine vorzusehen ist. Die Lösung ergibt auch relativ kurze Kommunikationswege zwischen der Steuerung und den zu steuernden Teilen.

Die Lösung ist aber im Obj. 908 nur skizzenhaft angedeutet worden, ohne die Beziehungen zwischen der autonom arbeitenden Steuerung der Maschine und einer Anlagensteuerung (ob Zentralsteuerung oder verteilte Steuerung) klarzustellen. Die Prinzipien der praktischen Ausführungen insbesondere der Spinnmaschinensteuerung sind durch unser Obj. 1011 (CH Patentanmeldung Nr. 3644/89 vom 4.10.89 mit dem Titel "Steuerung für die Beschickung einer Ringspinnmaschine mit Flyerspulen") klargestellt worden.

Gemäss der Erfindung des Obj. 1011 hat eine Spinnereianlage mindestens eine Gruppe von Ringspinnmaschinen und eine Förderanlage zum Fördern von Spulen bzw. Spulenträgern zu den Spinnmaschinen und zum Abführen von Spulen, bzw. von Spulenträgern von den Spinnmaschinen. Eine Steuerung ist auch für die Förderanlage vorgesehen. Die Erfindung des Obj. 1011 ist dadurch gekennzeichnet, dass jede Spinnmaschine der Gruppe mit einer eigenen Steuerung versehen ist und dass für jede Spinnmaschine eine jeweilige Schnittstelle zwischen der Steuerung der Förderanlage und der Steuerung der Maschine vorgesehen ist. Auf der Maschinenseite dieser Schnittstelle werden Bewegungen der Spulen bzw. ihrer Träger von der Maschinensteuerung bestimmt. Auf der Förderanlageseite dieser Schnittstelle werden Bewegungen der Spulen bzw. ihrer Träger von der Anlagesteuerung bestimmt.

Es sind vorzugsweise Mittel vorzusehen, um die Uebergabe einer Fördereinheit (eines Zuges) von der Anlagesteuerung an die Maschinensteuerung und umgekehrt zu melden. Die Meldung erfolgt vorzugsweise vorerst an die Maschinensteuerung und dann über diese Steuerung an die Anlagensteuerung. Es sind aber auch vorzugsweise Mittel vorhanden, um die Uebergabe einer Fördereinheit von der einen Steuerung an die andere zu verhindern, bevor die übernehmende Steuerung sich bereit erklärt hat, die Steuerung der Fördereinheit beim Uebertreten der Schnittstelle aufzunehmen.

Die Gesamtanlage ist vorzugsweise derart angeordnet, dass eine Fördereinheit, welche durch Uebertreten der Schnittstelle in das Steuerungsgebiet einer bestimmten Maschine eingetreten ist, in diesem Steuerungsgebiet bis zur Abgabe aller ihrer mitgetragenen Spulen bleibt. Weiterhin ist es vorzugsweise vorzusehen, dass eine Fördereinheit die Spulen zu einer Spinnmaschine fördert, auch leere Spulenträger (Hülse) von dieser Spinnmaschine zurück in die Anlage führt. Die Spinnmaschinensteuerung ist dann sowohl für die Steuerung der Abgabe der Spulen, zur Verarbeitung in den Spinnstellen (Beschickung des Gatters) als auch zum Steuern der Rückgabe der leeren Spulenträger an die Fördereinheit auszulegen.

Um einen geordneten Fluss von Spulenträgern in der ganzen Anlage zur gewährleisten, ist für jede Spinnmaschine ein Zählverfahren vorgesehen, um die Anzahl der von der Anlage auf einer bestimmten Fördereinheit gelieferten Spulen zu zählen, wobei die Maschinensteuerung dann für die Rückgabe einer entsprechenden Anzahl Leerträger an die Fördereinheit sorgen sollte. Falls dies aus irgendeinem Grund nicht möglich ist, kann eine entsprechende Meldung von der Maschinensteuerung an die Anlagensteuerung gesandt werden, sodass die Anlagensteuerung über das "Fehlmaterial" informiert wird.

Mit der Hilfe der im Objekt 1011 aufgeführten Erfindungsgedanken ist es möglich, den Anlagebau im Ringspinnsektor der Anlage weitgehend zu standardisieren. Dies gilt aber für das Transportsystem (in einem gewissen Sinn das Kernstück der Anlage) nicht. Dieses System muss in Abhängigkeit vom Grundplan (Layout) der Spinnerei ausgelegt werden. Beim Neubau mit neu installierten Maschinen ist es möglich, diesen Plan den Anforderungen der Automatisation anzupassen. Bei Altbauten hingegen muss der Anlagebauer mit dem fertig werden, was er vorfindet. Dabei muss er gelegentlich "Mischanlagen" zusammenstellen, worin ein Teil der Anlage aus neu installierten, für den automatischen Betrieb geeigneten Maschinen und der andere Teil aus alten, manuell bedienbaren Maschinen besteht.

Die Anlagesteuerung hat eigentlich auch mit zwei verschiedenen Maschinentypen zu tun. An einem Ende des Transportweges, steht die Ringspinnmaschine, am Anderen den Flyer. Die Ringspinnmaschine ist in bezug auf ein Transportsystem eine relativ "gutmütige" Maschine. Durch das Vorsehen einer Reserveposition für jedes Paar benachbarter Spinnstellen ist es möglich, die Gatterbeschickung Zeit-unkritisch durchzuführen. Mindestens beim sogenannten "wilden Wechsel" ist es nicht wesentlich, wieviele neue Flyerspulen auf einem Zug in die Maschine einfahren. Diese Aussage gilt nicht für einen sogenannten "Blockwechsel", aber sogar dann ist der Betrieb der Maschine als Ganze nicht durch Speiseprobleme an der einen oder der anderen Spinnstelle beeinträchtigt. Die Maschine wird für das Spulenwechseln nicht abgestellt.

Die Spinnstellen der Ringspinnmaschine weisen normalerweise die gleiche Geometrie auf - man kann sie verschieden bedienen und dadurch bestimmte Wirkungen erzielen, aber man muss dies nicht.

Beim Flyer ist die Situation anders. Der Flyer ist eine heikle Maschine, sowohl was die Konstruktion als auch was die Bedienung anbetrifft. Dazu kommt, dass ein Flyer mehrere Ringspinnmaschinen beliefert. Probleme beim Betrieb eines einzigen Flyers können daher erhebliche Schwierigkeiten auch in den nachfolgenden Stufen hervorrufen.

Der Flyer wird für das "Doffverfahren" (Spulenwechsel) abgestellt. Es müssen alle Spindeln "gleichzeitig" (innerhalb des gleichen Doffintervalls) gedofft werden. Die "Doffzeit" ist für den wirtschaftlichen Betrieb dieser Maschine von erstrangiger Bedeutung. Wenn ein Problem beim Doffen einer einzigen Spindel vorkommt, stehen alle Spindeln still, bis das Problem gelöst wird. Wenn dies öfters vorkommt, gerät die Spinnerei in Schwierigkeiten, den Materialfluss an die Ringpinnmaschinen zu gewährleisten, ohne zusätzliche Flyerkapazität zu installieren.

Ferner, die Spinnstellen der Flyer sind nicht alle gleich. Sie sind in zwei Reihen angeordnet, wobei die eine Reihe relativ nahe bei dem Streckwerk, und die andere relativ weit entfernt vom Streckwerk liegt. Die "Spinngeometrien"der beiden Reihen sind verschieden und dies bedeutet unterschiedliche Luntenwerte (Technologie). Ein Qualitätsspinner muss solche Unterschiede berücksichtigen. Dazu kommt, dass auf einem einzigen Flyer oft mehr als ein "Sortiment" (Fasermischung) verarbeitet wird und die Sortimente getrennt behandelt werden müssen.

Beim vollautomatischen Betrieb wird über längeren Perioden (z.B. Nachtschicht) kein Personal vorhanden sein, um Probleme am Flyer zu beheben. Es könnte schnell zu einem Zusammenbruch kommen, sodass der Konstrukteur auch dieses Risiko berücksichtigen muss.

Diese Erfindung sieht eine Anlage zum Fördern von Flyerspulen bzw. Spulenträgern zwischen einem Flyer und mindestens einer Ringspinnmaschine mittels Zügen. Eine Steuerung zum Steuern der Anlage ist vorhanden.

Nach einem ersten Aspekt der Erfindung sind Mittel vorgesehen, um die Zustände der Züge festzustellen und entsprechende Signale an die Steuerung zu liefern, sodass die Steuerung nur Züge in einem vorbestimmten Zustand bzw. in vorbestimmten Zuständen an den Flyer schickt.

Es kann ein solches Mittel an jeder Ringspinnmaschine vorgesehen werden. Es kann aber zusätzlich oder als Alternative eine Testvorrichtung zum Feststellen des Zustandes von einem Zug zwischen dem Flyer und den Ringspinnmaschinen vorgesehen werden. Die Testvorrichtung kann in einer Teststation vorhanden sein und die Steuerung kann derart angeordnet sein, dass die von den Ringspinnmaschinen in Richtung des Flyers fahrenden Züge durch die Teststation bzw. durch eine solche Teststation geleitet werden.

Es kann auch ein Abstellgleis in der Anlage vorhanden sein, sodass ein Zug, der nicht den vorbestimmten Zustand, bzw. einen der vorbestimmten Zustände aufweist, aus dem Haupttransportwagen zwischen dem Flyer und den Ringspinnmaschinen entfernt werden kann.

Nach einem zweiten Aspekt der Erfindung sind bei der Zusammenstellung der Züge aus Zugkomponenten Mittel vorhanden, um Zugkomponenten, die verschiedene Sortimente tragen, auszusortieren und die aussortierten Zugkomponenten wieder zu Zügen zusammenzustellen.

Die Zugskomponenten sind vorzugsweise koppelbar, bzw. entkoppelbar und das Mittel kann dann eine Koppel-, bzw. Entkoppelstation umfassen. Diese Station ist vorzugsweise zwischen dem Flyer und einem Puffer angeordnet.

Nach einem dritten Aspekt der Erfindung ist jede Transportstrasse zwischen dem Flyer und den Ringspinnmaschinen aus einander anschliessenden Transportstrecken zusammengestellt, wobei die Steuerung bei der Ankunft eines Zuges an einem Ende einer Transportstrecke festlegen muss, ob die Fahrt dieses Zuges in die nächste Transportstrecke fortgesetzt werden darf oder nicht.

Jede Transportstrecke ist vorzugsweise mit Sensoren zum Feststellen des Vorhandenseins von einem Zug mindestens in der Nähe von einem Ende der Transportstrecke versehen. Es sind auch vorzugsweise steuerbare Antriebsmittel zum Fördern des Zuges einer Transportstrecke entlang vorgesehen, wobei die Steuerung mit dem Antriebsmittel derart zusammenarbeitet, dass, wenn ein Zug in eine Transportstrecke eingedrungen ist, er automatisch bis zum anderen Ende der Transportstrecke gefördert wird.

Nach einem vierten Aspekt befasst sich die Erfindung mit einer Anlage, die mit Antriebsmitteln zum Fördern der Züge, mit Weichen zum Leiten der Züge und mit Sensoren zum Feststellen des Zustandes der Anlage versehen ist, wobei diese Antriebsmittel, Weichen und Sensoren über der Anlage verteilt sind.

Dieser vierte Aspekt der Erfindung ist dadurch gekennzeichnet, dass die Anlage mit einem Energienetz und einem Signalübertragungsnetz versehen ist, wobei das Signalübertragungsnetz mit der Steuerung und mit den Antriebsmitteln, Weichen und Sensoren, verbunden ist und die Antriebsmittel, Weichen und Sensoren, mit Energie aus dem Energienetz in Abhängigkeit von über dem Signalübertragungsnetz übertragenen Signale gespeist werden können. Das Signalübertragungsnetz ist vorzugsweise zur Uebertragung von digitalen Signalen angeordnet.

Ein fünfter Aspekt der Erfindung befasst sich mit einer Anlage, die eine Mehrzahl von parallel miteinander verbundenen Schienen umfasst. Die Steuerung ist derart angeordnet, dass über eine Zeitspanne die parallel miteinander verbundenen Schienen von Zügen im Wesentlichen gleichmässig benützt werden. Die parallel miteinander verbundenen Schienen können z.B. die Schienen eines Puffers sein. Der Ausdruck "parallel miteinander verbunden" bezieht sich in diesem Zusammenhang nicht auf die geometrische Anordnung der Schienen, sondern auf die Tatsache, dass diese Schienen alternative Transportwege zwischen zwei Stellen in der Anlage darstellen.

In einem sechsten Aspekt befasst sich die Erfindung mit einer Schienenanordnung, die eine Haupttransportstrasse mit mindestens einer Abzweigbahn umfasst, wobei im Betrieb das Fördern von Zügen in beiden Fahrtrichtungen sowohl auf der Haupttransportstrasse, als auch auf der Abzweigbahn erfolgt.

Nach dem sechsten Aspekt der Erfindung ist die genannte Haupttransportstrasse einer solchen Schienenanordnung dadurch gekennzeichnet, dass für jede Fahrtrichtung eine jeweilige Fahrschiene vorgesehen ist, wobei die eine Schiene direkt mit der Abzweigbahn verbunden ist und zwischen der Abzweigstelle (in der Fahrtrichtung der genannten einen Schiene betrachtet) eine Fahrverbindung zwischen den Schienen vorhanden ist, welche die Uebergabe eines Zuges in die entgegengerichtete Fahrtrichtung an die zweite Schiene ermöglicht.

Die Erfindung wird nun anhand der Ausführungsbeispiele und anhand der Zeichnungen näher erläutert werden. Es zeigt:

Fig. 1 Schematisch im Plan eine Spinnereianlage, die nach der Erfindung zu steuern ist

Fig. 2 Schematisch eine Steuerungsanordnung für die Anlage nach Fig. 1

Fig. 3 Ein Detail aus der Anlage gemäss Figuren 1 und 2

Fig. 4 Eine schematische isometrische Darstellung von einem Zug und einem Antrieb zum Bewegen des Zuges innerhalb der Anlage

Fig. 5 Eine schematische Darstellung im Querschnitt von einem Teil des Zuges zusammen mit einem zweiten Antrieb zum Bewegen des Zuges in der Nähe einer Ringspinnmaschine

Fig. 6 Eine schematische Seitenansicht eines Flyers mit automatischem Doffer

Fig. 7 Ein Querschnitt in der Ebene II-II in Fig. 6

Fig.8-12 Fünf schematische Darstellungen der Spulenbank eines Flyers mit verschiedenen Zuordnungen der Spindeln zu den zu verarbeitenden Sortimenten und Diagramme zur Erklärung von einem Doffvorgang für den Flyer nach Fig. 6

Fig. 13 Ein Plan einer Anlage gemäss dieser Erfindung

Fig. 14 Ein Detail der Anordnung nach Fig. 13

Fig. 15 Eine schematische Ansicht einer Testvorrichtung für eine Anordnung nach Fig. 14

Fig. 16 Schematische Darstellungen von Elementen eines Transportsystemes gemäss dieser Erfindung und

Fig. 17 eine schematische Darstellung von einem Steuer- bzw. Energienetzes.

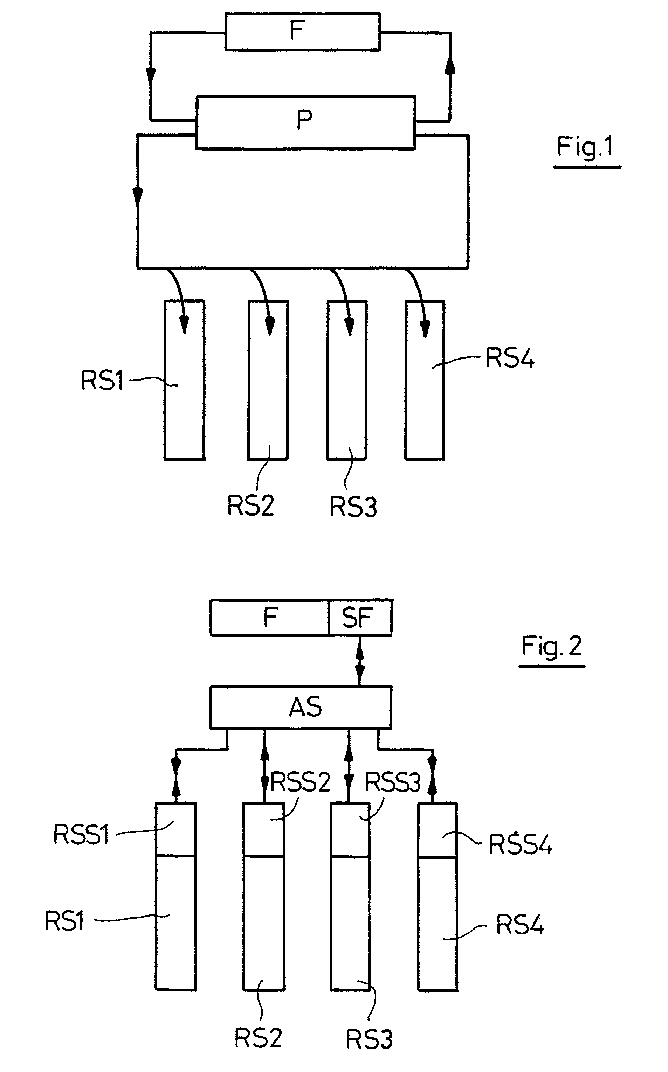

Fig. 1 zeigt eine Spinnereianlage mit einem Flyer F und mit vier Ringspinnmaschinen RS1, RS2, RS3 und RS4. In einer praktischen Anlage gäbe es einige Flyer und eine grosse Anzahl (zBsp. 10 -20) Ringspinnmaschinen. Die Prinzipien der Erfindung sind aber unabhängig von der Anlagengrösse gültig und in einer Grossanlage können die Maschinen gruppiert werden, sodass eine Gruppe von Ringspinnmaschinen mit Spulen von einem vorbestimmten Flyer bedient werden.

Im Beispiel gemäss Fig. 1 ist der Flyer F mit allen vier Ringspinnmaschinen über einem Schienennetz SN zum Transportieren von Flyerspulen verbunden. Dieses Netz ist in Fig. 1 nur schematisch angedeutet, enthält aber auf jeden Fall einen Puffer P. Die Anordnung ist im Prinzip in US-PS 3828682 schon gezeigt worden, wobei modernere Varianten dieser Anordnung in den EP-Patentschriften 311995 und 323400 gezeigt worden sind.

Fig. 1 sowie die vorhin erwähnten Patentschriften befassen sich hauptsächlich mit Fragen des Materialflusses. Es sind in diesem Zusammenhang zwei wesentliche Komponenten des Materialflusses zu erwähnen, nämlich Flyerspulen in der Laufrichtung - Flyer bis zur Ringspinnmaschine und Leerträger in der Laufrichtung - Ringspinnmaschine zum Flyer. Eine Flyerspule besteht aus einem Leerträger und einem Luntenkörper, welcher bei der Verarbeitung in der Ringspinnmaschine zu einem Garn gesponnen werden soll. Um einen kontinuierlichen Prozess zu gewährleisten, müssen bei der Ablieferung von Spulen an die Ringspinnmaschinen genügend Leerträger in der Anlage vorhanden sein, um die Fortsetzung des Luntenbildungsverfahrens im Flyer zu ermöglichen.

Fig. 2 stellt die gleiche Anlage nochmals dar, diesmal aber im Hinblick auf Signalfluss und Datenverarbeitung eher als Materialfluss. Gemäss Fig. 2 ist für das Transportsystem eine Anlagesteuerung AS und für jede einzelne Maschine eine eigene Steuerung vorgesehen. Die Steuerung des Flyers ist mit SF angedeutet und diejenigen der Ringspinnmaschinen sind mit RSS1, RSS2, RSS3 und RSS4 bezeichnet. Die Maschinensteuerungen sind für Datenaustausch in beiden Richtung mit der Anlagensteuerung AS verbunden.

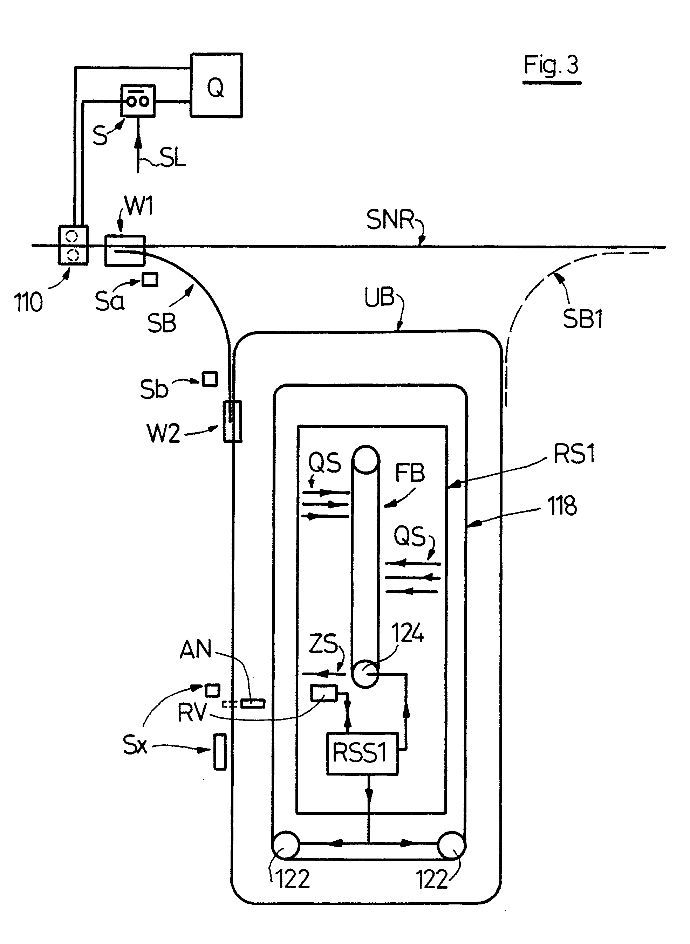

Fig. 3 zeigt schematisch die Strecke SNR des Schienennetzes SN, welche an den Enden der Ringspinnmaschinen vorbeiläuft, zusammen mit der Ringspinnmaschine RS1. Der Ringspinnmaschine ist eine Umlaufbahn UB zugeordnet, welche über eine Stichbahn SB und zwei Weichen W1,W2 mit dem Schienennetz verbunden ist. Um die Zeichnungen zu verkleinern, sind die Endkurven dieser Bahn schematisch als Gerade gezeichnet worden. Ein auf dem Schienennetz laufender "Zug" kann daher durch Betätigung der Weichen W1,W2 auf der Umlaufbahn UB der Ringspinnmaschine umgeleitet werden. Der Zug kann dann über die gleiche Stichbahn zurück ins Netz befördert werden oder dies könnte über eine zweite Stichbahn SB1 (gestrichelt) erfolgen.

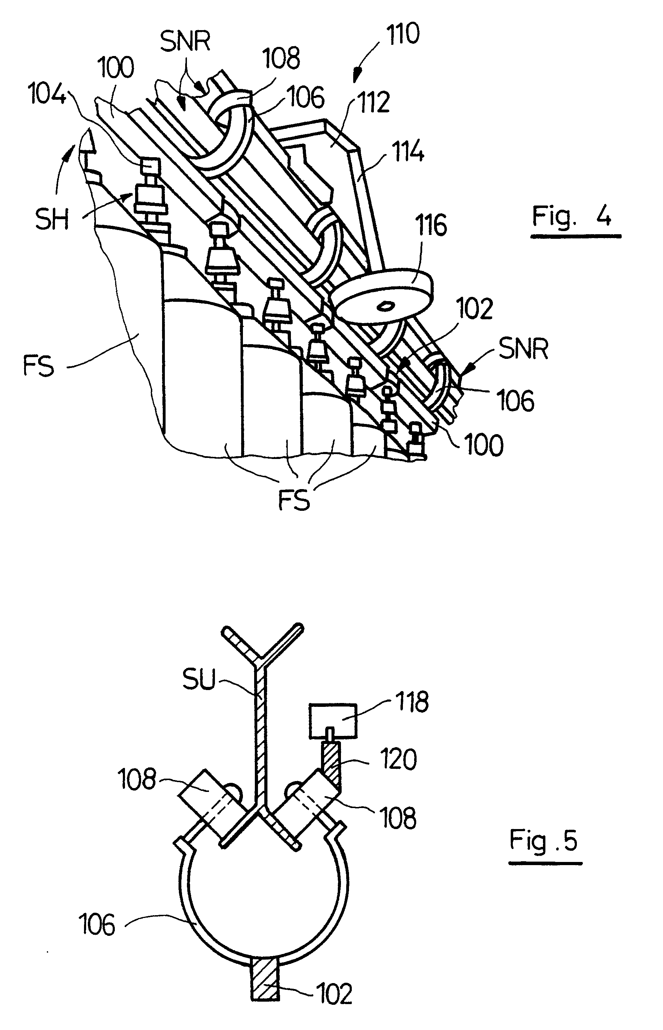

Die Struktur eines Zuges ist schematisch in Fig. 4 angedeutet worden, wo ein kurzer Abschnitt der Schienenstrecke SNR gezeigt wird. Der Zug selber besteht aus Vierkantteilen 100, die über Gelenkstücke 102 miteinander verbunden sind. Jeder Teil 100 und jedes Gelenkstück 102 trägt ein Zapfen 104, wodurch eine Flyerspule bzw. ein Träger für eine Flyerspule mit dem Teil bzw. mit dem Gelenkstück verbunden werden kann, um davon frei nach unten hängen zu können.

Jedes Gelenkstück 102 ist auch mit einem U-förmigen Joch 106 verbunden, wobei jeder Schenkel des Joches an seinem freien Ende ein frei drehbares Rad in der Form einer Rolle 108 hat. Diese Räder rollen auf geeigneten Laufflächen des Schienennetzes und übertragen gleichzeitig das Gewicht des Zuges an die Schiene. Ein Zug kann eine beliebige Anzahl von miteinander gekoppelten Teilen 100 umfassen. Die Gelenkstücke bilden dabei Koppelungen sowie senkrechte Drehachsen, sodass der Zug auch um engere Kurven des Schienennetzes gefahren werden kann.

Fig. 4 zeigt auch einen geeigneten Antrieb zum Gebrauch im Schienennetz SN. Dieser Antrieb umfasst eine Mehrzahl von Reibradaggregaten, wovon ein Aggregat 110 in Fig. 4 abgebildet ist. Das Aggregat besteht aus einem Motor 112 und einem Reibradpaar, wovon in Fig. 4 nur ein Reibrad 116 gesehen werden kann. Die Reibräder 116 sind je über Welle 114 mit dem Motor 112 verbunden. Die Räder sind derart angeordnet, dass sie die gegenseitig entgegengerichteten Seitenflächen der Teile 100 bzw. 102 berühren, wenn solche Teile direkt unterhalb dem Motor 112 stehen. Ein im Prinzip ähnlicher Reibradantrieb ist in US-PS 4769982 gezeigt worden.

Ein Aggregat 110 ist auch in Fig. 3 schematisch angedeutet worden. Diese Figur zeigt auch eine Energiequelle für den Motor 112 und einen selektiv betätigbaren Schalter S welcher die Speisung von Energie aus der Quelle Q an das Aggregat 110 ermöglicht, bzw. unterbricht. Der Schalter S ist von der Steuerung AS aus betätigbar, und zwar über eine Signalleitung SL. Jedes einzelne Aggregat 110 kann daher von der Anlagensteuerung AS gesteuert werden.

Fig. 5 zeigt nochmals ein Joch 106 mit seinem Rollenpaar 108 und einem Teil des Gelenkstückes 102. Das Joch 106 (und der entsprechende Zug) läuft aber nicht im Schienennetz SN, sondern auf einer Schiene SU der Umlaufbahn UB. In dieser Umlaufbahn wird der Zug nicht durch Reibradaggregate 110, sondern einen der Bahn UB parallel laufenden Kettenförderer 118 bewegt. Die Kettenglieder tragen einen Streifen 120, der im Reibkontakt mit einer der Rollen 108 steht. Wenn der Kettenförderer 118 der Bahn UB entlang in Bewegung gesetzt wird und ein Zug auf der Schiene SU steht, wirkt sich die Bewegung des Kettenförderers über den Streifen 120 im Abrollen der Räder 108 und daher in Bewegung des Zuges aus. Der Kettenförderer 118 ist auch in Fig. 3 schematisch angedeutet worden, und zwar im Zusammenhang mit zwei Antriebsmotoren 122, die von der Steuerung RSSI aus gesteuert werden könne. Die Bewegung des Zuges auf der Umlaufbahn UB steht deshalb unter der Kontrolle der jeweiligen Maschinensteuerung.

Es sind verschiedene Verfahren zur Abgabe der Flyerspulen FS (Fig. 4) von einem Zug an die Ablaufstellen im Gatter der Ringspinnmaschine (Gatterbeschickung) bekannt. Es ist zßsp. vorgeschlagen worden (EP-Patentanmeldung Nr. 310870 und 310871), ein Wechselwagen vorzusehen, welcher der Maschine entlang läuft und Flyerspulen von einer Hängebahn ins Maschinengatter umsteckt. Aehnliche Ideen sind in US-PS Nr. 4799353 zu finden. Diese Erfindung ist nicht auf eine bestimmten Art von Gatterbeschickung eingeschränkt. Dem gemäss ist diese Erfindung zur Anwendung im Zusammenhang mit Systemen gemäss der vorher erwähnten Patentschriften geeignet. Die bevorzugte Anordnung zur Gatterbeschickung ist aber in der EP-Patentanmeldung Nr. 311862 beschrieben worden. Eine Ausführung von einem System gemäss der letztgenannten Anmeldung wurde vollständigkeitshalber im Obj. 1011 erläutert. Da aber die Gatterbeschickung an und für sich in Bezug auf diese Erfindung von zweitrangiger Bedeutung ist, wird in diesem Fall nur eine kurze Beschreibung des bevorzugten Verfahrens in Zusammenhang mit Fig. 3 gegeben werden.

Jeder Vierkantteil 100 (Fig. 4) von einem Zug trägt auf seiner Unterseite ein Zwischenstück ZS (in Fig. 4 nicht gezeigte. Das Zwischenstück ZS hat eine Oeffnung, welche einen Kopplungsteil von einem Gleitstück aufnehmen kann. Das Gleitstück trägt seinerseits einen Spulenhalter SH konventioneller Bauart, worauf eine Flyerspule aufgehängt werden kann. Der Spulenhalter SH ermöglicht eine lösbare Verbindung mit der Hülse der Flyerspule FS.

Das Gatter der Ringspinnmaschine ist mit Querschienen QS (Fig. 3) versehen, welche sich oberhalb der Spinnstellen senkrecht zur Maschinenlängsrichtung erstrecken. Es ist eine Querschiene pro zwei benachbarten Spinnstellen vorgesehen, aber nur drei solcher Querschienen pro Maschinenseite sind in Fig. 3 schematisch angedeutet.

Die Maschine RS1 ist auch mit einem endlosen Förderband FB versehen, welches sich in Längsrichtung der Maschine erstreckt und über einen Motor 124 angetrieben werden kann. Dieser Motor ist auch von der Steuerung RSS1 aus steuerbar. Das Band FB ist mit in der Längsrichtung des Bandes nebeneinander angeordneten Schienenabschnitte (nicht gezeigt) versehen.

Jede Querschiene QS hat zwei freie Enden, wovon ein freies Ende nach aussen gegen die Umlaufbahn UB und das andere Ende nach innen gegen das Förderband FB gerichtet ist. Wenn das Förderband FB in einer "Grundstellung" angeordnet ist, flüchtet jede Querschiene mit einem Schienenabschnitt. Jeder Schienenabschnitt hat ein Profil, welches dem Profil der entsprechenden Querschiene QS entspricht.

Jedes Gleitstück G hat eine Oeffnung, welche dem Profil der Querschienen QS und Schienenabschnitte entspricht. Es sind Mittel vorgesehen, um Gleiter von den tragenden Zwischenstücken ZS zu entkoppeln und auf den Querschienen QS zu hängen. Dabei wird das Schienenprofil in der Oeffnung des Gleiters aufgenommen. Beim Umstecken eines Gleiters geht die von diesem Gleiter mitgetragenen Flyerspule FS natürlich mit. Die Mittel zum Umstecken der Gleiter und Flyerspulen FS werden in dieser Anmeldung nicht behandelt werden. Geeignete Mittel sind in unserem Obj. Nr. 907 (CH-Patentanmeldung 1395/89 vom 13.4.1989 mit dem Titel "Fahrbare Weiche") und in unserem Obj. Nr. 1000 (CH-Patentanmeldung Nr. 3523/89-5 vom 28.9.89, mit dem Titel "Einrichtung und Verfahren zum Wechseln von Vorgarnspulen an einer Ringspinnmaschine") beschrieben worden.

Nach dem Umstecken auf dem äusseren Ende einer Querschiene QS wird ein Gleiter mit seiner Flyerspule FS schrittweise nach innen aus einer Reserveposition in eine erste Arbeitsposition und dann in eine zweite Arbeitsposition verlegt. In den ersten und zweiten Arbeitspositionen wird die Lunte das Vorgarn von der Flyerspule abgewickelt und an eine der beiden dieser Schiene zugeordneten Spinnstellen abgeliefert. Nachdem die Lunte abgelaufen ist, wird der Gleiter mit der Leerhülse H von der Querschiene QS auf den entsprechenden Schienenabschnitt umgestellt, wobei gleichzeitig die Reserveposition zum Nachführen von einer weiteren Flyerspule freigestellt wird.

Die Uebergabe einer Flyerspule von einem auf der Umlaufbahn UB umlaufenden Zug ins Gatter der Ringspinnmaschine könnte von der Maschinensteuerung RSS1 (Fig. 3) gesteuert und überwacht werden. In den heute zur Verfügung stehenden Ausführungen ist dies nicht der Fall. Die Uebergabe wird vom Bedienungspersonal ausgelöst zBsp. durch Setzen einer "Flagge" am Ende der zu beliefernden Querschiene QS. Die Abwicklung einer Flyerspule, um eine Spinnstelle mit Fasermaterial zu beliefern, geht nur langsam vor sich und dauert zBsp. zwischen 10 und 60 Stunden. Es ist dementsprechend für das Bedienungspersonal eine relativ leichte Aufgabe, gelegentlich den Maschinen entlang zu patrouillieren und die zutreffenden Flaggen zu stellen. Bei voll automatischem Betrieb kann aber das Bedienungspersonal nicht ständig an den Maschinen zur Ueberwachung des Gesamtablaufes der Gatterbeschickung herumstehen.

Gemäss Obj. 1011 wird die Ueberwachung und Gesamtsteuerung der Gatterbeschickung (trotz fehlender Informationen über die einzelnen Uebergabeoperationen) von der Maschinensteuerung RSS1 übernommen und es wird auch eine Koordination mit der Anlagesteuerung gewährleistet.

Als Einführung zu einer Erklärung des Prinzipes des Objektes 1011, wird vorerst die Einleitung von der zweiten Komponente des Materialflusses für ein solches System erläute-rt werden, nämlich die Rückgabe der Leerhülsen H von der Ringspinnmaschine (vom Förderband FB) an den Zug zum Weiterbefördern in das Schienennetz SN zurück. Zur Rückgabe der Leerhülsen ist die Maschine RS1 mit einer Zusatzschiene ZS (Fig. 3) versehen, die keiner Spinnstelle zugeordnet ist. Statt dessen wird diese Zusatzschiene ZS einer Rückgabevorrichtung RV zugeordnet, die von der Maschinensteuerung RSS1 aus gesteuert werden kann. Eine dazu geeignete Vorrichtung ist in unserem Obj 1009 (CH-Patentanmeldung Nr. 3616/89 vom 3.10.89 mit dem Titel "Einrichtung zur Rückbeförderung von leeren Vorgarnspulen auf einen Vorgarntrolleyzug) beschrieben worden. Die Vorrichtung RV ist dazu geeignet, einen Gleiter von einem dem inneren Ende der Zusatzschiene ZS gegenüberstehenden Schienenabschnitt zu räumen, der Schiene ZS entlang zu bewegen und auf einem Zwischenstück ZS des Zuges wieder zu hängen. Dazu muss natürlich der Zug an einer geeigneten Stelle gegenüber der Zusatzschiene ZS positioniert werden.

Uebersichtshalber wird der Gesamtablauf, der von der Anlagesteuerung AS und der Maschinensteuerung RS1 überwacht und koordiniert werden muss, in zwei Aspekte aufgegliedert und zwar:

Aspekt 1 - Einfahrt bzw. Ausfahrt eines Zuges
Aspekt 3 - Rückgabe der Leerhülsen

Die Gatterbeschickung selber wird hier ausser Acht gelassen, da sie in Obj. 1011 behandelt worden ist.

## Aspekt 1 - Einfahrt bzw. Ausfahrt eines Zuges

Das Abschicken eines Zuges aus dem Puffer P (Fig. 1) an eine bestimmte Ringspinnmaschine zBsp. RS1 wird von der Anlagesteuerung AS ausgelöst und bis zum Ueberschreiten der Weiche W1 (Fig. 3) für die zutreffende Maschine unter der Kontrolle von der Zentralsteuerung AS durchgeführt. Zu diesem Zweck sendet die Steuerung AS Signale an die Schalter SL (Fig. 3) der zutreffenden Aggregate 110, um die Bewegung des Zuges aus dem Puffer P bis zur Stichbahn SB (Fig. 3) zu bewirken. Das Abschicken eines Zuges wird aber erst dann ausgelöst, nachdem die Anlagesteuerung AS ein "Rufsignal" von der entsprechenden Ringspinnmaschine (in diesem Fall RS1) empfangen hat. Beim Absenden eines Rufsignales stellt die Ringspinnmaschinensteuerung RSS1 sicher, dass die Weiche W2 in einer Stellung steht, welche die Einfahrt des Zuges in die Umlaufbahn UB ermöglicht. Die Motoren 122 (Fig. 3) für den Kettenförderer 118 werden aber noch nicht in Gang gesetzt, da noch kein Zug auf der Umlaufbahn UB steht.

Beim Abschicken des Zuges stellt die Anlagesteuerung AS die Weiche W1 auf Einfahrt in die Stichbahn SB. Die Stichbahn SB wird so kurz im Vergleich zur Zugslänge gewählt, dass das vorangehende Ende des Zuges die Weiche W2 überschreitet und in die Umlaufbahn UB hineindringt, bevor das nachgeschleppte Ende des Zuges das letzte Aggregat 110 vor der Weiche W1 verlassen hat. Das Eintreffen vom vorangehenden Ende des Zuges in der Stichbahn SB wird von einem Sensor Sa (Fig. 3) festgestellt und an die Maschinensteuerung RSS1 gemeldet. Die Maschinensteuerung setzt dann den Kettenförderer 118 in Gang, sodass beim Ueberschreiten der Weiche W2 das vorangehende Ende des Zuges vom Streifen 120 (Fig. 5) ergriffen wird. Der Zug wird dann durch den Kettenförderer 118 in die Umlaufbahn UB hineingezogen.

Der Sensor Sa meldet das Vorbeifahren des nachgeschleppten Zugendes an die Maschinensteuerung RSS1, welche diese Meldung an die Anlagesteuerung AS weiterleitet. Die Weiche W1 kann dann von der Anlagesteuerung wieder auf das Netz SN zurückgestellt werden, sodass die Schienenstrecke SNR zum Bewegen von Zügen an andere Ringspinnmaschinen wieder frei steht.

In der Nähe der Weiche W2 steht ein zweiter Sensor Sb. Das Vorbeifahren des nachgeschleppten Endes vom Zug wird auch von diesem Sensor an die Maschinensteuerung RS1 gemeldet, wonach die Weiche W2 der Maschinensteuerung zum Schliessen der Umlaufbahn UB gestellt wird. Diese Meldung könnte natürlich auch als Basis für das "Zug eingefahren" Signal an die Anlagesteuerung benützt werden.

Bei der Ausfahrt eines Zuges muss die Maschinensteuerung vorerst ein "Bereitschaftssignal" an die Anlagensteuerung senden. Die Anlagensteuerung kann dann die Weiche W1 wieder zur Stichbahn SB stellen, bevor sie einen Ausfahrtsbefehl an die Maschinensteuerung RSS1 zurücksendet. Die Maschinensteuerung stellt die Weiche W2 dann auch auf der Stichbahn SB und schaltet dem Kettenförderer 118 den Rückwärtsgang ein, sodass der Zug wieder über die Stichbahn SB bis zu einem Reibradaggregat 110 gefahren werden kann. Der Sensor Sa meldet die Abreise des Zuges aus der Stichbahn SB an die Maschinensteuerung, welche diese Meldung an die Anlagesteuerung AS weiterleitet. Die Weiche W1 kann dann wieder auf das Netz SN gestellt werden. Der "Sensor" Sa kann zu diesem Zweck (wenn notwendig) durch eine Gruppe von Sensorelementen gebildet werden. Nachdem der Zug die Weiche W2 passiert hat, kann der Kettenförderer 118 abgeschaltet werden. Das Abfertigen des Zuges über eine Zusatzstichbahn SB1 (Fig. 1) wird hier nicht beschrieben werden, da das Verfahren im Wesentlichen für beide Varianten gleich ist.

Das bisher beschriebene System gewährleistet eine geordnete Uebergabe eines Zuges an der Schnittstelle zwischen der Anlagensteuerung und der Maschinensteuerung, gewährleistet aber nicht einen kontrollierten Materialfluss in der Gesamtanlage. Ein Zug, welcher eine bestimmte Anzahl von Flyerspulen an die Ringspinnmaschine gebracht hat, sollte die gleiche Anzahl Leerhülsen in die Anlage zurücktragen. Wenn diese Voraussetzung in einem bestimmten Fall nicht erfüllt wird, muss die Anlagensteuerung Massnahmen ergreifen, um den "Hülsenverlust" wieder gutzumachen. Das Fehlen von Material könnte natürlich von der Anlagensteuerung im Schienennetz SN festgestellt und gutgemacht werden. Um die Kontrolle über das System zu gewährleisten, ist aber vozugsweise jede Maschinensteuerung mit Mitteln ausgerüstet, die das Feststellen des Zustandes vom Zug ermöglichen. Der Ausdruck "Zustand des Zuges" bezieht sich in diesem Zusammenhang auf die Belegung bzw. nicht Belegung von Plätzen im Zug mit Flyerspulen FS oder Hülsen H.

Der Zustand eines Zuges kann grundsätzlich auf zwei verschiedene Arten ermittelt werden. Es kann die Anzahl nicht belegter Halter oder es kann die Anzahl belegter Halter festgestellt werden. Die letztgenannte Methode wird zur Anwendung in dieser Erfindung bevorzugt.

Die Feststellung des Zustandes vom Zug kann auch zu verschiedenen Zeitpunkten durchgeführt werden. Dieser Zustand könnte z.B. gerade bei der Ausfahrt des Zuges ermittelt und über die Maschinensteuerung an die Anlagensteuerung gemeldet werde. Gemäss der bevorzugten Anordnung wird aber der Zustand des Zuges bei der Einfahrt in die Maschine ermittelt und das noch zu beschreibende Rückgabeverfahren wird derart gesteuert, dass die gleiche Anzahl von Leerhülsen an diesen Zug zurückgegeben wird. Der Sensor Sb wird dementsprechend derart gewählt, dass er für jede Flyerspule einen Impuls ausgibt. Die Impulse werden von einem nicht gezeigten Zähler gezählt und die Anzahl gezählter Impulse wird an die Maschinensteuerung RS1 gemeldet. Der "Sensor" kann zu diesem Zweck aus einer Mehrzahl von Sensorelementen gebildet werden, wie schon in Obj. 1011 erläutert wurde.

## Aspekt 2 - Rückgabe der Leerhülsen

Das Rückgabeverfahren selber ist in Obj. 1011 behandelt worden und wird hier nicht widerholt werden.

Das Rückgabeverfahren sollte nur dann von der Maschinensteuerung ausgelöst werden, wenn der Zug zum Empfang von Gleiter mit Leerhülsen H bereitsteht. Dies kann durch eine geeignete Sensorenanordnung Sx (Fig. 3) gewährleistet werden. Für den vollautomatischen Betrieb müssen verschiedene Kriterien für den Abbruch des Rückgabeverfahrens definiert werden. Dieses Verfahren muss natürlich abgebrochen werden, sobald alle Halter auf dem Zug durch Gleiter (mit oder ohne Leerhülsen H) belegt sind. Dieser Zustand kann durch die Sensoren Sx festgestellt werden und löst über die Maschinensteuerung RSS1 das schon beschriebene Verfahren zum Abschicken des Zuges aus.

Dieses erste Kriterium reicht aber allein nicht, weil das System weder die Vollständigkeit der Belegung der Halter beim Einfahren des Zuges in die Maschine, noch dass Vorhandensein aller ins Gatter abgelieferten Gleiter bzw. Hülsen H gewährleisten kann. Vorzugsweise wird das Rückgabeverfahren daher abgebrochen, wenn soviele Gleiter (mit oder ohne Flyerhülsen FH) an den Zug wieder zurückgegeben worden sind, wie dieser Zug bei seiner Einfahrt in die Maschine getragen hat. Das Zählen der belegten Plätze bei der Einfahrt des Zuges wird daher über die Maschinensteuerung RSS1 ausgenützt um ein Steuerungskriterium für das Rückgabeverfahren zu bestimmen.

Das Rückgabeverfahren muss auch abgebrochen werden, wenn keine Gleiter bzw. Flyerhülsen H mehr auf dem Förderband FB vorhanden sind. Die Maschinensteuerung RSS1 kann derart angeordnet werden, dass sie die Anzahl Uebergabeoperationen der Rückgabevorrichtung RV feststellt und mit der Anzahl von der Einfahrt des Zuges belegten Plätze vergleicht. Es kann dadurch der Verlust einer Hülse innerhalb der Maschine festgestellt werden. In diesem Fall kann die Maschinensteuerung beim Abschikken des Zuges eine geeignete "Fehlmeldung" an die Anlagesteuerung AS senden, was die weitere Behandlung des Zuges im Schienennetz SN erleichtern kann. Falls aber auch eine "Sollanzahl" von belegten Plätzen auf dem Zug festgelegt wird, (z.B. von Fall zu Fall durch die Anlagesteuerung AS oder durch den Anlagenkonstrukteur als eine vorbestimmte Standardmenge) kann die Maschinensteuerung RSS1 schon durch das Zählen bei der Einfahrt des Zuges das Fehlen von einem Gleiter bzw. einer Hülse H feststellen und beim Abschicken des Zuges an die Anlagesteuerung melden. Eine ähnliche Wirkung könnte dadurch erzielt werden, dass bei der Einfahrt des Zuges Sensoren vorhanden sind, um nicht belegte Plätze auf diesem Zug festzustellen und an die Maschinensteuerung RSS1 zu melden. Eine Sensorenanordnung zur Erfüllung dieser und anderer Aufgaben ist im Obj. 1011 erläutert worden und die Beschreibung wird hier nicht wiederholt werden.

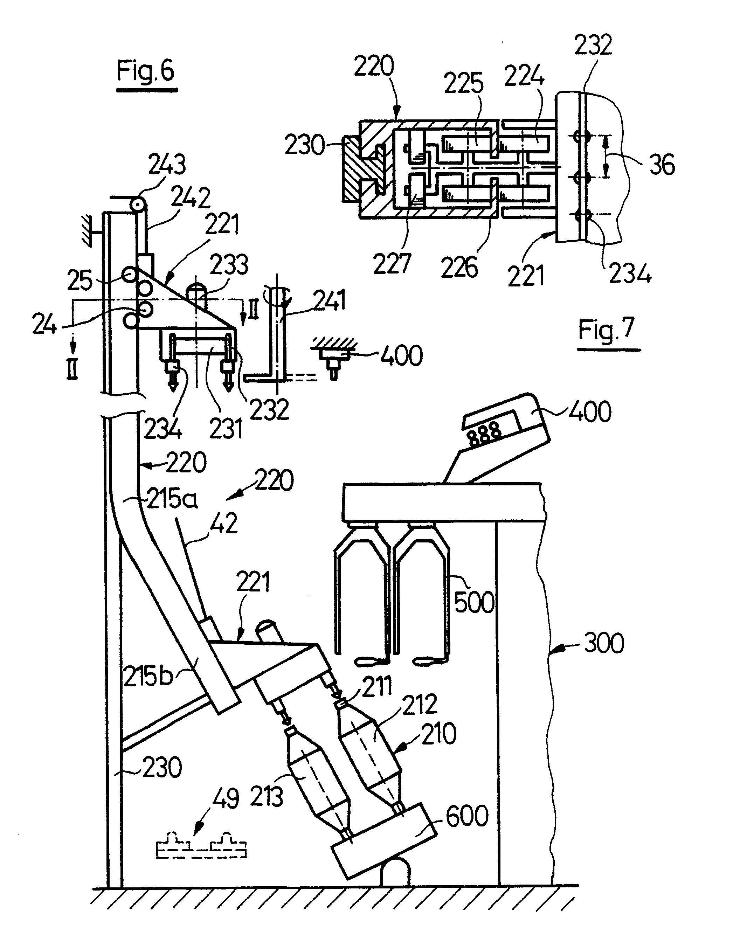

Es wird nun nachfolgend anhand der Figuren 6 bis 11 das Spulenwechseln an einem Flyer erläutert werden. Als Beispiel ist ein Verfahren nach unserer europäischen Patentanmeldung Nr. 89116997.1 zur Erläuterung ausgewählt worden. Die Erfindung ist aber auch zur Anwendung mit anderen Flyerdoffern geeignet, siehe z.B. den Aufsatz "Automatisierung des Flyers in Verbindung mit der Ringspinnmaschine", Melliand Textilberichte, 8/1987, Steite 536 bis 541. Von einem in Fig. 6 dargestellten Flyer 300 sind lediglich das Streckwerk 400, die Flügel 500 und der bereits (z.B. gemäss der US-PS 4 757 679) aus seiner Betriebsstellung abgesenkte und in der gekippten Schrägstellung befindliche Spulenwagen 600 gezeigt. Die vollen Hülsen 210, Vorgarnspulen bzw. Flyerspulen genannt, bestehen aus je einer leeren Hülse 211 mit einer Faserbandpackung 212 und werden von in der Fig. 1 gestrichelt gezeichneten Spindeln 213 gehalten. Die Spindeln 213 sind in zwei Reihen angeordnet und zwar eine "hintere Reihe" (näher dem Streckwerk) und eine "vordere Reihe" (weiter vom Streckwerk entfernt).

Eine sich über die ganze Wirkungslänge, d.h. den ganzen Spinnstellenbereich, des Flyers erstreckender Träger 221 cum Transitbalken einer vom Flyer völlig getrennten Doff-Vorrichtung 220 ist an mindestens zwei, zum Wagen 600 hin abgewinkelten, von Profilstützen 230 am Boden abgestützten, einstückigen Gleitschienen 220 verfahrbar, bzw. bewegbar. Jede Gleitschiene 220 weist eine vertikale Bewegungsbahn 215 auf, wobei die Schrägheit der Schrägstellung des Wagens 600 entspricht. Fig. 7 zeigt eine Ausführungsform eines extrudierten Profils einer Gleitschiene 220, wo ersichtlich ist, wie der Träger 221 mittels Rollen 224 an der Aussenseite und Rollen 225 an der Innenseite eines offenen Steges 226 der Gleitschiene 220 und Seitenführungsrollen 227 auf der Gleitschiene 220 verfahrbar ist. Der Träger 221 weist in herkömmlicher Weise ein um zwei Umlenkrollen 231 gespanntes, von einem Motor bewegbares, endloses Band 232 auf. Am Band 232 befestigt sind Haltemittel in Form von Einsteckzapfen 234, welche nunmehr mit, bezogen auf die Teilung der Hülsen auf dem Wagen 600 und in den Spinnstellen, der halben Teilung auseinander liegen, sodass die Zahl der Zapfen 234 doppelt so gross ist, wie die Zahl der Spinnstellen. In Fig. 6 oben befindet sich der Träger 221 in der Abtransportstellung der vollen Hülsen 210, die ebenfalls die Antransportstellung der leeren Hülsen 211 ist. In dieser Höhenlage ist auch eine an sich bekannte Hängetransporteinrichtung 400 angeordnet und ebenfalls ein schwenkbarer Hebelarm 241, der die vollen Hülsen 210 vom Träger 221 auf die Transporteinrichtung 400 und die leeren Hülsen 211 von der Transporteinrichtung 400 auf den Träger 221 umplaziert.

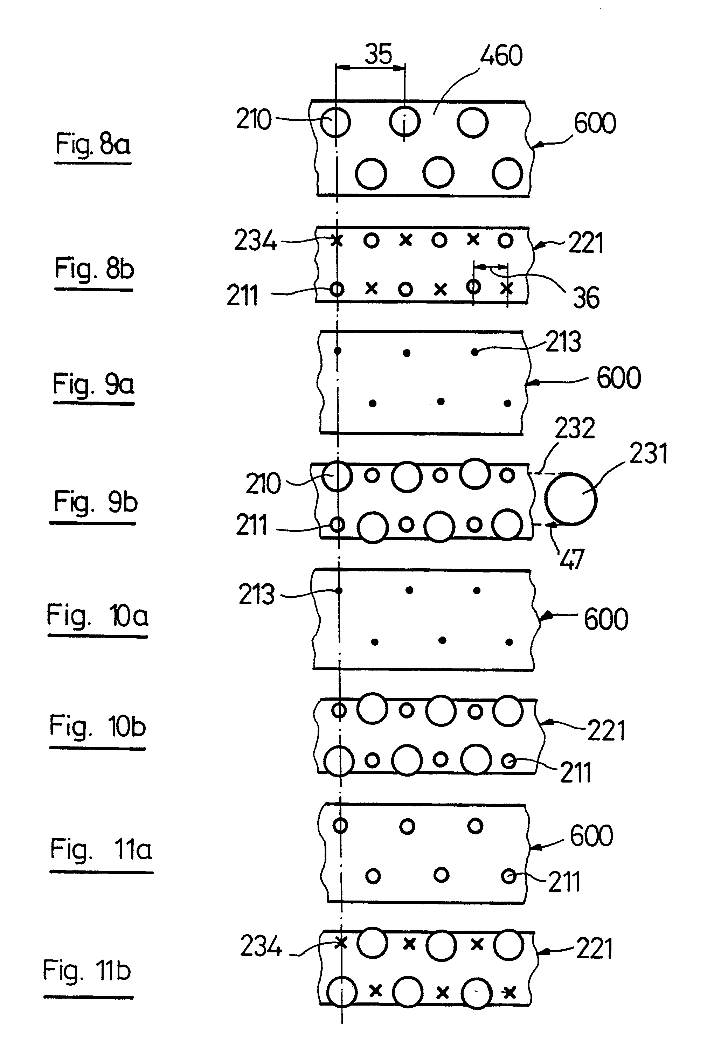

Die Wirkungsweise wird nachfolgend unter Einbezug der Figuren 8 bis 11 beschrieben.

Volle Hülsen müssen durch leere Hülsen ausgetauscht werden. Die vollen Hülsen 210 werden mit dem Wagen 260 abgesenkt und in die Schrägstellung gebracht. Inzwischen befinden sich die leeren Hülsen 211 am Träger 221 in der Abtransportstellung. Mittels mindestens zweier um Umlenkrollen 243 geschlungenen Seilen 242 wird der Träger 221 samt den leeren Hülsen 211 abwärts bewegt, zuerst vertikal, dann durch die abgewinkelte Form der Gleitschienen 220 in die Schrägstellung. Somit werden die leeren Hülsen 211 in einem durchgehenden Bewegungsablauf, ohne Zwischenlagerung, in die Schrägstellung abgesenkt. Die leeren Zapfen 234 des Trägers 221 sind dabei auf die vollen Hülsen 210 ausgerichtet. Dadurch gelangen die leeren Hülsen 211 in Leerräume 400 zwischen den vollen Hülsen 210 (Fig. 8). Die leeren Zapfen 234 koppeln sich an die vollen Hülsen 210 an. In dieser Schrägstellung wird der Träger 221 mit vollen und leeren Hülsen über die Spindeln 213 angehoben (Fig. 9). Dann wird der Motor 233 in Gang gesetzt und verschiebt das Band 232 gemäss einem Pfeil 47 um eine halbe Teilung (Fig. 10). Jetzt sind die leeren Hülsen 211 auf die Spindeln 213 ausgerichtet. Der Träger 221 senkt sich wieder in der Schrägstellung und plaziert die leeren Hülsen 211 auf die Spindeln 213. Der Träger 221 enthält jetzt lediglich die in der Schrägstellung befindlichen vollen Hülsen 210 (Fig. 6). Aus dieser Schrägstellung werden die vollen Hülsen 210 in einem durchgehenden Bewegungsablauf, ohne Zwischenlagerung, in die vertikale Abtransportstellung gehoben, bzw. befördert. Der Träger 225 dient somit gleichzeitig als Kreuzungsstelle der leeren Spulen 211 und der vollen Spulen 210.

Es wird aus den Fig. 6 bis 11 klar sein, dass beim Spulenwechsel an einem Flyer
- alle Spulen gleichzeitig vom Spulenwagen abgehoben werden
- alle neuen Hülsen gleichzeitig aufgesteckt werden.

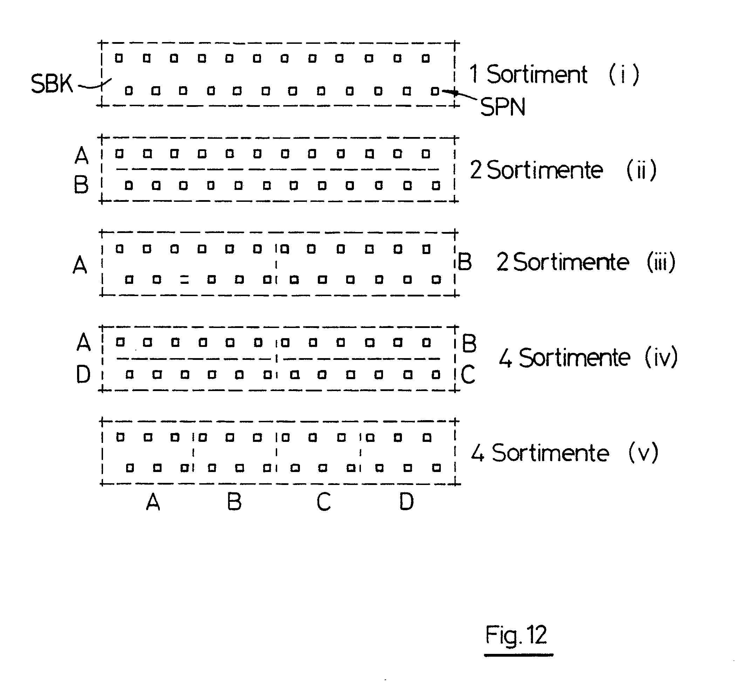

Ein neben dem Träger 221 stehender Zug muss die entsprechende Anzahl Leerhülsen an den Flyer bringen - es darf in diesem Fall keine leeren Plätze im Zug geben. Es ist dann klar, dass der gleiche Zug die frisch gedofften Spulen übernimmt. Hier liegt aber ein weiteres Problem, das anhand von Fig. 12 kurz erklärt werden soll.

Fig. 12 umfasst fünf Diagramme - (i) bis (v). Jedes Diagramm stellt schematisch einen Plan des Spulenwagens SBK mit Spindeln SPN dar. Diagramm (i) entspricht dem einfachen Fall - es wird nur ein Sortiment (eine Fasermischung) in diesem Flyer verarbeitet. Diagramm (ii) zeigt eine Möglichkeit zur Verarbeitung von zwei Sortimenten A und B. Das eine Sortiment wird in der vorderen Reihe und das andere in der hinteren Reihe verarbeitet. Diagramm (iii) hingegen zeigt das eine Sortiment auf der linken Seite und das andere auf der rechten Seite der Maschine. Es werden aber gelegentlich vier Sortimente A,B,C und D auf einem Flyer verarbeitet. Diagramme (iv) und (v) zeigen zwei Möglichkeiten, um dies durchzuführen.

Die verschiedenen Sortimente dürfen bei der Weiterverarbeitung nicht "vermischt" werden, sondern müssen saüber getrennt und je an eine für sie vorgesehene Ringspinnmaschine, bzw. Maschinengruppe gefördert werden.

Sogar im Fall (i) - nur ein Sortiment - können unter Umständen "Vermischungsprobleme" vorkommen. Wegen der Unterschiede zwischen den Stellungen der vorderen bzw. hinteren Spindeln im Vergleich zum Streckwerk fällt die Lunte der vorderen Spindeln leicht anders aus als die Lunte der hinteren Spindeln. Für die Qualitätsspinner können solche Unterschiede von Bedeutung sein, sodass für ihn schon der Fall (i) dem dargestellten Fall (ii) gleichzustellen ist.

Auf die Darstellung der verschiedenen Anlagenauslegungen (Layouts), die vorkommen können, wird hier verzichtet. Beispiele sind in EP 307806 und EP 306450 zu finden. Die Problematik des Layouts, besonders in Zusammenhang mit Altbauten, ist dem Fachmann bestens bekannt.

Der Anlagenbauer, der dieser Vielfalt gegenüber steht, kann
- sein Angebot auf "Standard Typen" einschränken
- jede Anlage "nach Mass schneiden"
- oder versuchen "Standardelemente" zu definieren, die flexibel zusammengestellt werden können.

Diese Erfindung sucht Lösungen zur letztgenannten Aufgabe.

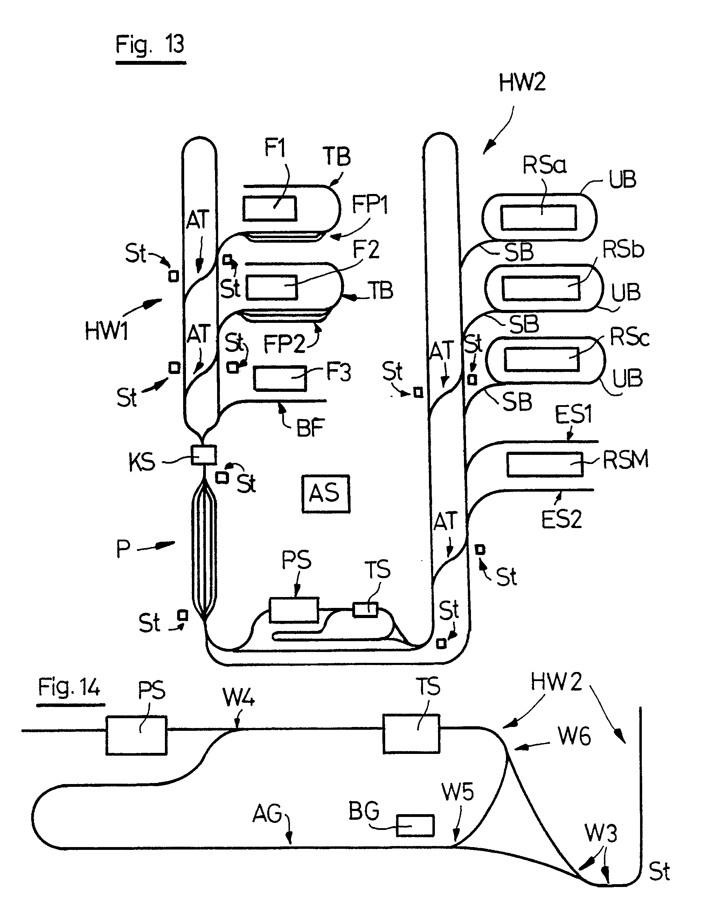

Fig. 13 zeigt schematisch einen Plan von einer Anlage gemäss dieser Erfindung, die z.B. zehn Ringspinnmaschinen umfasst, wovon in Fig. 13 nur vier gezeigt worden sind. Die drei Ringspinnmaschinen RSa, RSb und RSc sind im Wesentlichen gleich aufgebaut, wie die in Fig. 3 dargestellte Ringspinnmaschine RS1, das heisst, jede hat ihre eigene Umlaufbahn UB mit einer zu dieser Umlaufbahn führenden Stichbahn SB. Das Gatter für jede dieser drei Maschinen ist für den Vollautomatischen Betrieb ausgerüstet. Die Ringspinnmaschine RSM hingegen ist nicht für die vollautomatische, sondern nur für die manuelle Beschickung des Gatters ausgerüstet. Es können trotzdem Flyerspulen an diese Maschine herangeführt, bzw. Flyerhülsen von dieser Maschine abtransportiert werden, und zwar über zwei Einbahnschienen ES1 und ES2, die jeweilige Maschinenseiten bedienen.

Die Anlage umfasst weiterhin drei Flyer, wovon zwei Maschinen F1, bzw. F2 mit automatischen Doffvorrichtungen gemäss den Fig. 6 - 11 versehen sind. Der dritte Flyer F3 muss beim Spulenwechsel manuell bedient werden. Jeder automatische Flyer F1,F2 hat eine Transportbahn TB, welche die Zustellung von einem Transportzug (als Transporteinrichtung 400, Fig. 6) an die Doffvorrichtung ermöglicht. Flyer F3 hat auch eine Transportbahn BF, welche die Heranführung eines Transportzuges für ein manuell ausgeführtes Spulenwechselverfahren ermöglicht.

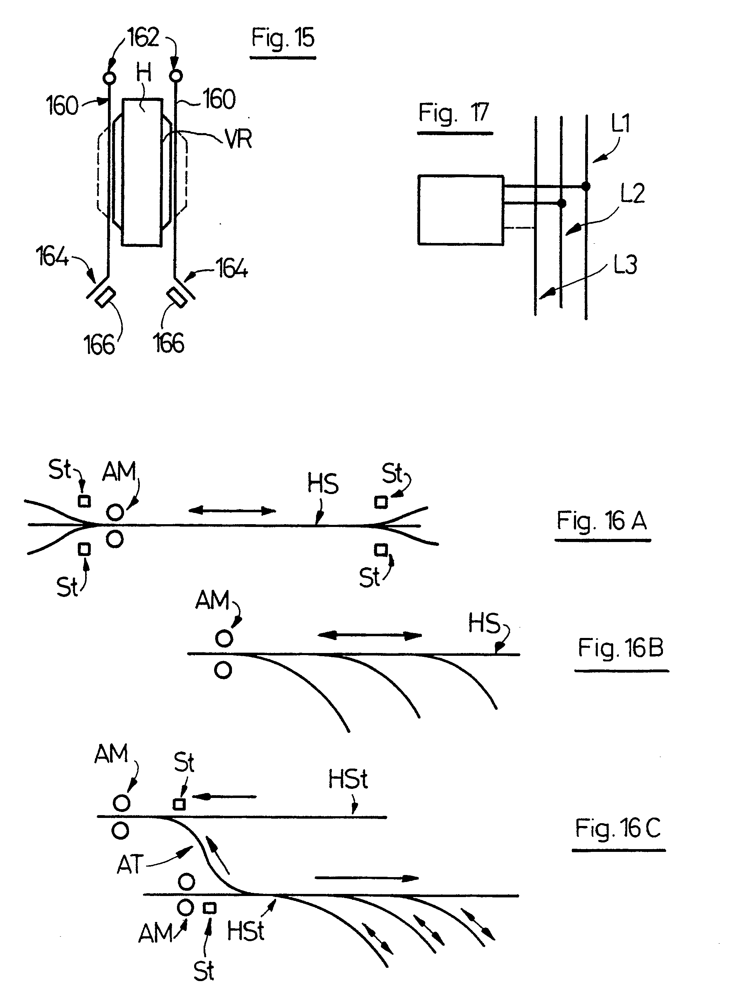

Die Anlage umfasst weiterhin zwei Haupttransportstrassen HW1,HW2 und einen Puffer P. Die Schienenanordnung in jede Haupttransportstrasse wird erst später in dieser Beschreibung in Zusammenhang mit Fig. 16 behandelt werden. Vorläufig kann ohne genaue Erklärung angenommen werden, dass die Hauptstrasse HW1 das Fördern von Transportzügen in beide Richtungen zwischen dem Puffer P und den Flyern ermöglicht, während die Haupttransportstrasse HW2 das Fördern von Transportzügen in beiden Richtungen zwischen dem Puffer P und den Ringspinnmaschinen ermöglicht.

Die Anlage ist auch mit einer Anlagesteuerung AS versehen, welche zum Signalaustausch mit sehr vielen Elementen der Gesamtanlage angeordnet ist. Uebersichtshalber sind keine der Signalverbindungen in Fig. 13 gezeigt worden, aber einzelne Verbindungen werden nachfolgend in Zusammenhang mit den weiteren Figuren (insbesondere in Zusammenhang mit Fig. 17) erläutert werden. Wie schon in Obj. 1011 erklärt und in Fig. 2 gezeigt wurde, ist jede Spinnmaschine (ob Flyer oder Ringspinnmaschine) mit einer eigenen Steuerung (in Fig. 13 nicht gezeigt) versehen, sodass bei den vollautomatischen Maschinen das Spulenwechseln unter der Gesamtkontrolle der Maschinensteuerung und nicht der Anlagesteuerung AS abläuft.

Aus der Beschreibung der Fig. 6 - 11 wird es klar sein, dass beim Einleiten eines Spulenwechselverfahrens an einem Flyer (ob vollautomatisch oder manuell bedient) ein voller Satz an Leerhülsen bereitstehen muss, sodass der Doffvorgang ohne Verzögerung durchgeführt werden kann. Diese Hülsen müssen sogenannte "gereinigte" Hülsen sein, d.h..allfällige, beim Abschicken von einer Ringspinnmaschine noch vorhandenen Vorgarnreste müssen vor der Ablieferung an den Flyer entfernt werden. Die für das Spulenwechseln vorgesehenen Leerhülsen sollten weiterhin keine Fehler (Schäden) aufweisen, die zu einem Fehlwechsel führen könnten.

Die Verwendung der Anlage zur Verarbeitung von verschiedenen Sortimenten steht dem Spinner frei, d.h. bei der Auslegung der Anlage ist es nicht bekannt, ob ein Flyer mit nur einem Sortiment oder mit mehreren Sortimenten (Fig. 12) benützt wird. Der Doffvorgang für jeden Flyer läuft daher nach dem Prinzip ab, dass jede Flyerspindel einen jeweiligen Hülsen, bzw. Spulenträger im Transportzug zugeordnet wird, und zwar gleichgültig, ob der Flyer mit nur einem Sortiment oder mit verschiedenen Sortimenten arbeitet.

Aus dem System gemäss Objekt 1011 ist es schon beim Abschicken eines Zuges von einer Ringspinnmaschine gekannt, ob alle Plätze in diesem Zug belegt sind oder nicht. Die Maschinensteuerung sendet ein entsprechendes Signal an die Anlagesteuerung AS. Die Anlagesteuerung kann dann eine Weiche W3 in der Haupttransportstrasse HW2 derart stellen, dass der fehlerhafte Zug auf einem Abstellgleis AG eingefahren wird und ein Alarm, oder ein anderes Zeichen gesetzt wird, sodass der Fehler vom Bedienungspersonal behoben wird. Dies bedeutet, dass der fehlerhafte Zug von den Haupttransportstrassen entfernt wird und daher den Betrieb auf diesen Haupttransportstrassen nicht verhindern kann.

Gemäss dem Stand der Technik ist die Haupttransportstrasse HW2 auch mit einer sogenannten Putzstation PS versehen, welche vor der Rückführung von Hülsen in den Puffer P allfällige Lunten bzw. Vorgarnreste entfernt. Eine solche Putzstation ist z.B. von der Firma MURAO Boseki erhältlich. Gemäss dieser Erfindung ist vor der Putzstation (in der Fahrtrichtung von der Ringspinnmaschine in den Puffer betrachtet) eine Teststation TS vorgesehen, die feststellen soll, ob die von einem Zug getragenen Hülsen zur Behandlung in der Putzstation PS geeignet sind oder nicht. Ein Zug auf der Rückfahrt in den Puffer gelangt erst in die Teststation, nachdem er die Weiche W3 passiert hat, ohne dabei auf dem Abstellgleis AG umgeleitet zu werden.

Eine geeignete Schienenanordnung ist in Fig. 14 gezeigt worden. Es ist eine Zusatzweiche W4 zwischen der Teststation TS und der Putzstation PS vorgesehen, sodass beim Feststellen einer für die Hülsenreinigung ungeeigneten Hülse die Weiche W4 auf das Abstellgleis gestellt wird, sodass der entsprechende Zug nicht in die Putzstation gelangt, sondern zur manuellen Bedienung auf dem Abstellbzw. Reparaturgleis AG umgeleitet wird. Der Abstand zwischen der Teststation TS und der Weiche W4 muss grösser als die Zuglänge sein, was natürlich auch für das Abstellgleis AG zutrifft. Das "Abstellgleis" kann auch in der Form eines kleinen Puffers (mit den parallel verbundenen Schienenabschnitten) gebildet sein.

Nachdem die Fehler der abgestellten Züge vom Bedienungspersonal wieder behoben sind, können diese Züge zum Wiederintegrieren im Transportsystem frei gegeben werden. Dies kann z.B. durch ein in der Nähe des Abstellgleises AG gestelltes Bedienungsgerät BG (Fig. 14) durchgeführt werden. Bei der manuellen Bedienung dieses Gerätes leitet es ein Signal an die Anlagesteuerung AS, die nachher zu einem geeigneten Zeitpunkt den reparierten Zug nach dem Stellen der Weichen W5 und W6 wieder durch die Teststation TS leiten kann. Eine weitere Teststation könnte z.B. nach der Putzstation vorgesehen werden, um die Zustände der gereinigten Hülsen abzutasten. Beim Feststellen einer defekten (z.B. beschädigten) Hülse könnte der Zug ebenfalls durch Betätigung einer geeigneten Weiche (nicht gezeigt) auf das Abstellgleis AG geleitet werden.

Die Teststation, bzw. jede Teststation und die Putzstation werden auf jeden Fall je mit einer eigenen Steuerung versehen werden, welche den Testbzw. den Putzvorgang in dieser Station steuert. Diese Steuerung kann auch gegebenenfalls direkt mit der Weiche zum Leiten eines Zuges auf dem Abstellgleis und mit den Antriebsmitteln zum Abführen des Zuges auf diesem Gleis verbunden werden. Dabei muss auf jeden Fall eine Meldung an die Anlagesteuerung AS gesendet werden, sodass letztere über den Vorgang im Test- bzw. Putzbereich informiert ist. Die "Intelligenz" des Steuerungssystems kann daher über der Anlage verteilt werden. Das Zurückführen eines Zuges aus dem Abstellgleis auf der Hauptstrasse HW2 darf aber weder vom Bedienungspersonal noch von einer Teststation, sondern nur von der Anlagesteuerung AS eingeleitet werden.

Fig. 15 zeigt eine schematische Anordnung zur Durchführung von einem Testverfahren in einer Teststation TS. Durch die dargestellte Einrichtung wird festgestellt, ob eine vom Zug (nicht gezeigt) herabhängende Hülse H einen in der Putzstation PS entfernbaren Vorgarnrest VR (voll ausgezogene Linien) oder ein übergrosser Fadenrest (gestrichelt) trägt. Die heute erhältlichen Putzstationen sind nämlich derart angeordnet, dass sie nur Vorgarnreste bis zu einem vorbestimmten maximalen Durchmesser behandeln können.

Die Testeinrichtung besteht aus zwei Tasthebeln 160, die von den jeweiligen Schwenkachsen 162 nach unten hängen. An seinem unteren Ende hat jeder Hebel 160 einen abgewinkelten Teil 164, der normalerweise einen jeweiligen Initiator 166 abdeckt. Beim Durchfahren einer Hülse H mit einem entfernbaren Vorgarnrest VR bleiben die Hebel 160 in ihren dargestellten normalen Stellungen, sodass das Ausgangssignal von jedem Initiator 166 unverändert bleibt. Beim Durchfahren einer Hülse mit einem übergrossen Vorgarnrest hingegen kommt der Vorgarnkörper in Berührung mit beiden Hebeln 160 und stösst sie auseinander, wobei jeder Hebel um seine jeweilige Drehachse 162 geschwenkt wird. Dabei werden beide Initiatoren 166 abgedeckt, was zu einer Veränderung der beiden Ausgangssignalen führt. Die Durchfahrt des Zuges wird dann bis zum Umstellen der Weiche W4 (Fig. 14) angehalten, wonach der Zug dann wieder in Gang gesetzt werden kann, diesmal aber zum Abstellen auf dem Gleis AB.

Es ist schon bekannt, die Länge der Transportzüge zwischen den Flyern und den Ringspinnmaschinen anzupassen, um den verschiedenen Anforderungen dieser beiden Maschinentypen gerecht zu werden. Ein dazu geeignetes System ist z.B. in der EP-Patentanmeldung Nr. 307806 beschrieben worden. Eine Anlage gemäss Fig. 13 ist zu diesem Zweck mit einer Koppel- bzw. Entkoppelstation KS versehen, wobei die Koppel- bzw. Entkoppeloperationen z.B. auch nach dem im EP 307806 beschriebenen Verfahren ablaufen könnte. Nach dieser Erfindung ist die Station KS aber nicht nur dazu ausgenützt, die Länge der Züge an den verschiedenen Anforderungen anzupassen, sondern wenn notwendig die Zugkomponenten nach den von ihnen getragenen Sortimenten auszusortieren. Die aussortierten Zugkomponenten können dann auch in der Zugstation KS wieder zu neuen Zügen mit einheitlichen Sortimenten zusammengestellt werden. Zu diesem Zweck muss vom Bedienungspersonal in der Anlagesteuerung eingegeben werden, wieviele Sortimente zu verarbeiten sind, und nach welcher Anordnung (Fig. 12) sie auf den Flyern zu verarbeiten sind. Die einzelnen Zugkomponenten müssen auch derart dimensioniert sein, dass jeder Komponent, d.h. jede koppelbare, bzw. entkoppelbare Einheit nur ein Sortiment trägt. Die Zuordnung der Zugkomponenten zu den Sortimenten wird dann von der Anlagesteuerung festgestellt und das Aussortieren, bzw. die Neuzusammenstellung in der Station KS wird entsprechend unter die Kontrolle der Anlagesteuerung AS durchgeführt.

Es kann auch jede Transportbahn TB eines voll automatischen Flyers mit einem kleinen Puffer FP1 bzw. FP2 versehen werden. Dies erlaubt das vorläufige Speichern von mit vollen Spulen beladenen Zügen an den Flyern F1 bzw. F2, falls wegen Engpässen in der Station KS diese Züge nicht sofort behandelt werden können.

Es werden nun anhand der Fig. 16 verschiedene Möglichkeiten zur Gestaltung der Hauptstrassen HW1 bzw. HW2 erläutert werden. Wie schon erwähnt wurde, müssen diese Hauptstrassen in beide Fahrtrichtungen befahren werden können. Es gibt zu diesem Zweck zwei Möglichkeiten, nämlich eine einzige Hauptschiene HS (Fig. 16A und 16B) für den Verkehr in beiden Fahrtrichtungen oder eine Hauptschiene HSh für die Hinfahrt und noch eine Hauptschiene HSr für die Rückfahrt(Fig. 16c) vorzusehen. In einem Streckenabschnitt gemäss Fig. 16A, bzw. 16B müssen die Antriebsmittel AM für die Züge (z.B. Reibradantriebe nach Fig. 4) reversierbar sein. Dies bedeutet aber Komplikationen und Aufwand sowohl im Bezug auf die Antriebsmotoren selber, wie auch auf die Steuerung solcher Motoren. In einem Streckenabschnitt nach Fig. 16 hingegen müssen die Antriebsmittel AM nur in die eine Drehrichtung arbeiten, was sowohl für die Motorenkonstruktion als auch für die Steuerung viel einfacher ist. Vorzugsweise ist daher jede Haupttransportstrasse HW1, bzw. HW2 einer Anlage nach Fig. 1 als ein "Doppelschienenweg" nach Fig. 16C ausgeführt, was auch bei der Darstellung in Fig. 13 angenommen wurden. Die zwei Schienen jeder Haupttransportstrasse müssen natürlich an dem einen Ende zusammengeführt werden und mit dem Puffer P verbunden werden und an ihrem anderen Ende durch eine Umkehrkurve verbunden werden.

Es entsteht aber in einem solchen System ein Problem bei der Rückführung eines Zuges aus einer Abzweigbahn (z.B. aus einer Stichbahn SB, einer Transportbahn TB, oder aus einer der Bahnen ES1, ES2 und BF) auf die jeweilige Haupttransportstrasse zurück. Die Abzweigbahnen zweigen nämlich alle direkt von der Hinfahrtschiene HSh (Fig.16C) ab. Beim "Rückwärtsfahren" eines Zuges darf dieser Zug aber nicht wieder an ein Abtriebsmittel AM der Hinfahrtsschiene HSh gelangen, da dieses Antriebsmittel nur in die Hinfahrtsrichtung arbeitet. Der Rückwärtsfahrende Zug muss dementsprechend vor dem Erreichen des Antriebsmittels AM auf der Hinfahrtsschiene HSh auf die Rückfahrschienen HSr umgeleitet werden und in Zusammenarbeit mit einem Antriebsmittel AM dieser letzteren Schiene gebracht werden. Dies wird in Fig. 16C und in Fig. 13 durch das Vorsehen von Ausfahrtstraversen AT ermöglicht. Jede Traverse ist durch eine geeignete, von der Anlagesteuerung AS steuerbare Weichenanordnung (nicht gezeigt) mit den Hauptschienen HSh, bzw. HSr verbunden. Wie aus Fig. 13 und Fig. 16C ersichtlich ist, muss nicht für jede Abzweigbahn eine eigene Traverse vorgesehen werden. Eine solche Traverse muss aber zwischen einer Abzweigbahn und dem dieser Bahn in der Hinfahrtsrichtung vorangehenden Antriebsmittel AM vorgesehen werden.

Die Definition des Fahrweges für einen bestimmten Zug und das entsprechende Stellen der Weichen, bzw. die entsprechende Betätigung der verschiedenen Antriebsmittel wird von der Anlagesteuerung AS aus gesteuert. Um die Anlage effizient und rationell zu betreiben, dürfen mehrere Züge gleichzeitig auf dem Schienennetz "unterwegs" sein. Um dabei Kollisionen bzw. gegenseitige Verhinderungen zu vermeiden, ist das Schienennetz vorzugsweise in Transportstrecken, in sogenannte "Blockstrecken", aufgeteilt, wobei nur ein Zug zu einem bestimmten Zeitpunkt in einer Blockstrecke vorhanden sein darf. Jede Blockstrecke ist daher an mindestens einem Ende mit einem Sensor vorgesehen, welcher die Annäherung eines Zuges an dieses Ende der Blockstrecke feststellt und an die Anlagesteuerung meldet. Solche Sensoren sind z.B. mit dem Bezugszeichen St sowohl in Fig. 13, wie auch in den verschiedenen Diagrammen der Fig. 16 und in Fig. 14 angedeutet worden.

Alle einer Blockstrecke zugeordneten Antriebsmittel AM werden vorzugsweise gleichzeitig von der Anlagesteuerung angeschaltet, bzw. abgeschaltet. Nachdem daher ein Zug in eine bestimmten Blockstrecke eingetreten ist, wird er ohne Verzögerung bis zum anderen Ende dieser Strecke gefördert. Beim Feststellen seiner Annäherung an diesem anderen Ende durch den jeweiligen Sensor St wird durch die Anlagesteuerung eine Entscheidung getroffen, ob die nächstliegende Blockstrecke frei, bzw. von einem anderen Zug in Gebrauch ist. Dementsprechend wird der erste Zug entweder durch Abschalten der Antriebsmittel der vorangehenden Blockstrecke vor dem Eintreten in die nachfolgende Blockstrecke still gesetzt, oder die Fahrt dieses Zuges in diese nachfolgende Strecke fortgesetzt. Beim Eindringen eines Zuges in eine Blockstrecke sollten die Antriebsmittel dieser Blockstrecke entweder eingeschaltet werden oder sich schon in Gang befinden, um die Durchfahrt des Zuges durch diese Strecke zu ermöglichen.

Es wird aus Fig. 16A klar sein, dass eine Blockstrecke von einer Hauptschiene, die für den Verkehr in beide Richtungen vorgesehen ist, mit Sensoren an beiden Enden versehen werden muss. Dabei ist auch zu berücksichtigen, dass mindestens eine Bahn, die von bzw. zu einem Knotenpunkt KP (eine Node) im Netz führt, frei gehalten werden muss, da sonst die in entgegengesetzter Richtung fahrenden Züge sich gegenseitig blockieren könnten.

Aus der vorangehenden Beschreibung wird wohl klar sein, dass eine Anlage in der Praxis eine grosser Anzahl von Aktoren (z.B. Antriebsmotoren und Weichenbetätigungsvorrichtungen) und Sensoren umfassen wird. Der grösste Teil dieser Sensoren und Aktoren müssen mit der Anlagensteuerung AS verbunden werden. Falls jeder Aktor, bzw. jeder Sensor einzeln mit der Steuerung verbunden werden muss, wird die Verdrahtungsarbeit, bzw. Aufwand für die Anlage beträchtlich sein. Dafür schafft eine Anordnung gemäss Fig. 17 Abhilfe. Demgemäss wird vorgeschlagen, für jede Anlage ein Energienetz und ein Datenübertragungsnetz vorzusehen. Diese beiden Netze können das Schienennetz SN folgen, könnten aber auch davon abweichen. Das Energienetz kann aus zwei Netzteilen bestehen, nämlich aus einem elektrischen Netzteil und einem pneumatischen Netzteil. In Fig. 17 werden drei Leitungen gezeigt, wobei die eine Leitung L1 eine Databus zur Signalübertragung, die zweite Leitung L2 als einen elektrischen Leiter und die dritte Leitung L3 als ein Druckluftrohr ausgeführt ist. Das Energienetz und das Signalnetz führen an jeder Stelle des Schienennetzes vorbei, wo ein Aktor, bzw. ein Sensor vorgesehen werden muss. Bei der Montage der Anlage müssen dann die Aktoren, bzw. Sensoren nicht mit der Anlagesteuerung über Einzeldrähte, bzw. mit der jeweiligen Energiequelle (nicht gezeigt) über einzelne Leitungen verbunden werden, sondern sie können unmittelbar an das Energienetz, bzw. das Signalübertragungsnetz verbunden werden.

Um ein solches System zu verwirklichen, muss jeder an diesen Netzen verbundener Aktor, bzw. Sensor mindestens mit einem Signalempfänger und vorzugsweise auch mit einem Signalsendeapparat versehen werden, welcher zum Datenaustausch mit der Anlagesteuerung AS geeignet ist. Dabei ist das Signalnetz vorzugsweise zur Uebertragung von digitalen Signalen ausgelegt und die Signalempfangs, bzw. Sendegeräte müssen entsprechend ausgewählt werden.

Die zur Verwendung bereit stehenden, aber noch nicht abgerufenen Züge bleiben im Puffer P stehen. Die Anordnung ist vorzugsweise derart getroffen, dass im Puffer P eine "Durchfahrtsbahn" stets frei gehalten wird, sodass ein zum sofortigen Einsatz vorgesehener Zug ohne Rangierarbeit durchgefahren werden kann. Die Verwaltung des Puffers kann sonst in verschiedener Weise in Abhängigkeit von den Anforderungen festgelegt werden. Es können z.B. verschiedene Bahnen des Puffers den jeweiligen Zugstypen zugeordnet werden. Die den Bahnen des Puffers zugeordneten Antriebsmittel sind vorzugsweise von der Anlagesteuerung AS einzeln steuerbar, um die Bewegungen der Züge innerhalb des Puffers genau bestimmen zu können.

Nach einer bevorzugten Anordnung wird die Pufferverwaltung derart getroffen, dass über eine vorbestimmte Zeitperiode alle Bahnen des Puffers ungefähr gleichmässig benützt werden. Dadurch werden Veränderungen der Bahnen durch unregelmässiges Befahren (z.B. die Ansammlung Flug oder anderen Abfallmaterialien) vermieden werden. Sofern solche Ansammlungen durch das Befahren der Bahn abgeräumt werden können.

**Ansprüche**

1. Eine Anlage zum Fördern von Flyerspulen, bzw. Spulenträgern zwischen einem Flyer und mindestens einer Ringspinnmaschine mittels Zügen, wobei die Anlage mit einer Steuerung zum Steuern der Anlage versehen ist, dadurch gekennzeichnet, dass Mittel vorgesehen sind, die Zustände der Züge festzustellen und entsprechende Signale an die Steuerung zu liefern, sodass die Steuerung nur Züge in einem vorgestimmten Zustand, bzw. in vorbestimmten Zuständen an den Flyer schickt.

2. Eine Anlage nach Anspruch 1, dadurch gekennzeichnet, dass ein solches Mittel an jeder Ringspinnmaschine vorgesehen ist.

3. Eine Anlage nach Anspruch 1 oder 2 dadurch gekennzeichnet, dass eine Testvorrichtung zum Feststellen des Zustandes eines Zuges zwischen dem Flyer und den Ringspinnmaschinen vorgesehen ist.

4. Eine Anlage nach Anspruch 3, dadurch gekennzeichnet, dass die Testvorrichtung in einer Teststation vorgesehen und die Steuerung derart angeordnet ist, dass die von den Ringspinnmaschinen in Richtung des Flyers fahrenden Züge durch die Teststation bzw. durch eine solche Teststation geleitet werden.

5. Eine Anlage nach einem der vorangehenden Ansprüchen dadurch gekennzeichnet, dass ein Abstellgleis in der Anlage vorhanden ist, sodass ein Zug, der nicht den vorbestimmten Zustand, bzw. einen der vorbestimmten Zustände aufweist, aus der Haupttransportstrasse zwischen dem Flyer und den Ringspinnmaschinen entfernt werden kann.

6. Eine Anlage zum Fördern von Flyerspulen, bzw. Spulenträgern zwischen einem Flyer und mindestens einer Ringspinnmaschine mittels Zügen, wobei die Anlage mit einer Steuerung zum Steuern der Anlage versehen ist, dadurch gekennzeichnet, dass bei der Zusammenstellung der Züge aus Zugskomponenten Mittel vorhanden sind, um Zugskomponenten, die verschiedene Sortimente tragen, auszusortieren und die aussortierten Zugskomponenten wieder zu Zügen zusammenzustellen.

7. Eine Anlage nach Anspruch 1 dadurch gekennzeichnet, dass die Zugskomponenten koppelbar, bzw. entkoppelbar sind und das Mittel eine Koppel- bzw. Entkoppelstation umfasst.

8. Eine Anlage zum Fördern von Flyerspulen bzw. Spulenträgern zwischen einem Flyer und mindestens einer Ringspinnmaschine mittels Zügen, wobei die Anlage mit einer Steuerung zum Steuern der Anlage versehen ist, dadurch gekennzeichnet, dass jede Transportstrasse zwischen dem Flyer und den Ringspinnmaschinen aus einander anschliessenden Transportstrekken zusammengestellt ist, wobei die Steuerung bei der Ankunft eines Zuges an einem Ende einer Transportstrecke festlegen muss, ob die Fahrt dieses Zuges in die nächste Transportstrecke fortgesetzt werden darf oder nicht.

9. Eine Anlage nach Anspruch 8 dadurch gekennzeichnet, dass jede Transportstrecke mit Sensoren zum Feststellen des Vorhandenseins von einem Zug mindestens in der Nähe von einem Ende der Transportstrecke versehen ist.

10. Eine Anlage nach Anspruch 8 oder 9 dadurch gekennzeichnet, dass steuerbare Antriebsmittel zum Fördern des Zuges einer Transportstrecke entlang vorgesehen sind, wobei die Steuerung mit dem Antriebsmittel derart zusammenarbeitet, dass, wenn ein Zug in eine Transportstrecke eingedrungen ist, er automatisch bis zum anderen Ende der Transportstrecke gefördert wird.

11. Eine Anlage mit Antriebsmitteln zum Fördern der Züge, mit Weichen zum Leiten der Züge und mit Sensoren zum Feststellen des Zustandes der Anlage versehen ist, wobei diese Antriebsmittel, Weichen und Sensoren über die Anlage verteilt sind dadurch gekennzeichnet, dass die Anlage mit einem Energienetz und einem Signalübertragungsnetz versehen ist, wobei das Signalübertragungsnetz mit der Steuerung und mit den Antriebsmitteln, Weichen und Sensoren, verbunden ist und die Antriebsmittel, Weichen und Sensoren, mit Energie aus dem Energienetz in Abhängigkeit von über dem Signalübertragungsnetz übertragenen Signale gespeist werden können.

12. Eine Anlage nach Anspruch 11 dadurch gekennzeichnet, dass das Signalübertragungsnetz zur Uebertragung von digitalen Signalen angeordnet ist.

13. Eine Anlage zum Fördern von Flyerspulen, bzw. Spulenträgern zwischen einem Flyer und mindestens einer Ringspinnmaschine mittels Zügen, wobei die Anlage mit Steuerung zum Steuern der Anlage versehen ist und eine Mehrzahl von parallel miteinander verbundenen Schienen umfasst, dadurch gekennzeichnet, dass die Steuerung derart angeordnet ist, dass über eine Zeitspanne die parallel miteinander verbundenen Schienen von Zügen im Wesentlichen gleichmässig benützt werden .

14. Eine Schienenanordnung, die eine Haupttransportstrasse mit mindestens einer Abzweigbahn umfasst, wobei im Betrieb das Fördern von Zügen in beiden Fahrtrichtungen, sowohl auf der Haupttransportstrasse, als auch auf der Abzweigbahn erfolgt, dadurch gekennzeichnet, dass für jede Fahrtrichtung eine jeweilige Fahrschiene vorgesehen ist, wobei die eine Schiene direkt mit der Abzweigbahn verbunden ist und vor der Abzweigstelle (in der Fahrtrichtung der genannten einen Schiene betrachtet) eine Fahrverbindung zwischen den Schienen vorhanden ist, welche die Uebergabe eines Zuges in die entgegengerichtete Fahrtrichtung an die zweite Schiene ermöglicht.

15. Eine Schienenanordnung nach Anspruch 14 dadurch gekennzeichnet, dass Antriebsmittel zum Fördern der Züge den Schienen entlang verteilt werden und die Fahrverbindung zwischen der Abzweigstelle un den letzten Antriebsmittel (in der Fahrtrichtung der genannten einen Schiene betrachtet) angeordnet ist.

EP 0 431 268 A1

Fig.1

Fig. 2

Fig. 3

SNR

100

108

110

104

106

112

114

SH

116

FS

102

SNR

106

100

FS

Fig. 4

SU

118

108

120

108

106

102

Fig .5

## Fig.6

## Fig.7

Fig. 8a

Fig. 8b

Fig. 9a

Fig. 9b

Fig. 10a

Fig. 10b

Fig. 11a

Fig. 11b

SBK

SPN

1 Sortiment (i)

A
B

2 Sortimente (ii)

A

B

2 Sortimente (iii)

A
D

B
C

4 Sortimente (iv)

4 Sortimente (v)

A          B          C          D

Fig. 12

EP 0 431 268 A1

Fig. 13

Fig. 14

22

Fig. 15

Fig. 17

Fig. 16 A

Fig. 16 B

Fig. 16 C

**Europäisches Patentamt**

# EUROPÄISCHER RECHERCHENBERICHT

Nummer der Anmeldung

**EP 90 11 7711**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D,Y,A | EP-A-0 323 400 (HOWA MACHINERY LTD.)<br>* Spalte 12, Zeile 10 - Spalte 13, Zeile 41; Figur 13 * * Spalte 5, Zeilen 34 - 46 *<br>— — — | 1,3,4,6,8, 10,15 | D 01 H 9/18<br>D 01 H 13/00<br>B 65 G 43/08<br>B 07 C 5/38 |
| A | EP-A-0 311 394 (JAMES MACKIE & SONS LTD.)<br>* Anspruch 1 *<br>— — — | 6 | |
| A,D | MELLIAND TEXTILBERICHTE. no. 8, 01 August 1987, HEIDELBERG DE G.SCHULZ: "AUTOMATISIERUNG DES FLYERS IN VERBINDUNG MIT DER RINGSPINNMASCHINE"<br>* Seite 539, Spalte 2, Zeilen 1 - 7 *<br>— — — | 7 | |
| Y | THE NEW ENCYCLOPAEDIA BRITANNICA,CHICAGO, ET.AL. BAND 7, SEITE 881, SPALTE 3, ZEILEN 57 - 77<br>— — — | 6 | |
| Y | THE NEW ENCYCLOPAEDIA BRITANNICA, CHICAGO ET.AL.,BAND 28 SEITE 796, SPALTE 1, ZEILEN 17 - 20 UND 41 - 48<br>— — — — — | 8 | |

|  |  |  | RECHERCHIERTE SACHGEBIETE (Int. Cl.5) |
|---|---|---|---|
|  |  |  | D 01 H<br>B 65 G<br>B 07 C |

Der vorliegende Recherchenbericht wurde für alle Patentansprüche erstellt

| Recherchenort | Abschlußdatum der Recherche | Prüfer |
|---|---|---|
| Den Haag | 21 November 90 | HOEFER W.D. |